# EUROPÄISCHE PATENTSCHRIFT

(11) **EP 1 674 899 B1**
(45) Veröffentlichungstag und Bekanntmachung des Hinweises auf die Patenterteilung: **08.08.2012**
(21) Anmeldenummer: 05020065.8
(22) Anmeldetag: 15.09.2005
(51) Int. Cl.: G02B 6/00, G02F 1/01

(54) **Beleuchtungseinrichtung**
Illumination device
dispositif d'eclairage

(30) Priorität: 22.11.2004 DE 102004056329
(43) Veröffentlichungstag der Anmeldung: 28.06.2006
(73) Patentinhaber: Electrolux Home Products Corporation N.V., 1130 Brussels (BE)
(72) Erfinder: Winkelmann, Klaus, 63688 Gedern (DE); Meister, Horst, 91459 Markt Erlbach (DE)
(74) Vertreter: Röder, Richard

(56) Entgegenhaltungen:
- DE-A1- 10 135 478
- DE-A1- 10 259 623
- US-A- 5 590 945
- US-A- 6 152 569
- US-A1- 2003 058 633

## Beschreibung

Die Erfindung betrifft eine Beleuchtungseinrichtung gemäß dem Oberbegriff des Patentanspruches 1. Weiterhin betrifft die Erfindung eine Beleuchtungsvorrichtung, die eine Vielzahl der vorgenannten Beleuchtungseinrichtungen aufweist. Außerdem betrifft die Erfindung einen Lichtleiter, der für die obige Beleuchtungseinrichtung vorgesehen ist.

Beleuchtungseinrichtungen, die einen Lichtleiter und eine oder mehrere Lichtquellen umfassen, werden häufig verwendet, um einen Innenraum, beispielsweise von Elektrogeräten zu beleuchten. Dabei ist es erwünscht, dass der vorgesehene Bereich möglichst gleichmäßig ausgeleuchtet wird. Einzelne helle oder dunkle Stellen sind unerwünscht. Oftmals sind Lichtleiter aus Platzgründen geometrisch derart ausgebildet, dass an einigen Stellen die unerwünschten hellen oder dunklen Bereiche auftreten. Bei herkömmlichen Beleuchtungseinrichtungen wird der Endbereich oftmals für die Lichtquelle benötigt, so dass der Lichtleiter sich nicht über die vollständige Länge der Beleuchtungseinrichtung erstreckt und am Endbereich kein Licht austritt. Damit kann der vorgesehene Bereich nicht vollständig ausgeleuchtet werden.

Aus der US 6,152,569 ist eine flache Lichtquelle bekannt, die für die Rückbeleuchtung einer Flüssigkeitskristallanzeige geeignet ist. Die flache Lichtquelle umfasst einen Lichtleiter, der als Flächenstück ausgebildet ist. An einer oder beiden Stirnseiten des Lichtleiters sind jeweils zwei parallele Entladungsröhren angebracht. Die eine großflächige Seite des Lichtleiters dient als lichtzerstreuende Fläche. Dia andere großflächige Seite des Lichtleiters dient als Lichtaustrittsfläche. Die Lichtaustrittsfläche ist rechteckförmig ausgebildet. Aufgrund der Entladungsröhren erstreckt sich die Lichtaustrittsfläche nicht über die gesamte Länge der Beleuchtungseinrichtung, so dass eine gleichmäßige Lichtverteilung über die gesamte Länge der Beleuchtungseinrichtung nicht möglich ist. Da der Lichtleiter als Flächenstück ausgebildet ist, ist der Platzbedarf für die Beleuchtungseinrichtung verhältnismäßig groß. Aufgrund der Entladungsröhren einerseits und des großen Lichtleiters andererseits ist der konstruktive Aufwand für die Beleuchtungseinrichtung verhältnismäßig hoch.

Die US 5 590 945 A beschreibt eine Beleuchtungseinrichtung der eingangs genannten Art. Diese Beleuchtungseinrichtung ermöglicht eine Lichtverteilung über die gesamte Länge der Beleuchtungseinrichtung bzw. des Lichtleiters. Dennoch treten in der Lichtverteilung hellere und dunklere Bereiche auf. Weiterhin ist der Platzbedarf für die Beleuchtungseinrichtung relativ hoch. Außerdem wird ein Bereich entlang der beiden Längsseiten nicht ausgeleuchtet.

Aus der DE 101 35 478 A1 ist eine Beleuchtungseinrichtung zur Beleuchtung des Innenraumes oder eines Inheneinrichtungsteiles bekannt. Die Beleuchtungseinrichtung umfasst eine Strukturoberfläche, die sich aus einer Vielzahl trapezförmiger Prismen zusammensetzt. Somit besteht diese Strukturoberfläche aus ebenen Oberflächenabschnitten.

In der US 2003/0058633 A1 ist eine Beleuchtungseinrichtung mit einem plattenförmigen Lichtleiter beschrieben. Entlang einer Richtung des Lichtleiters sind abwechselnd und hintereinander gekrümmte und ebene Oberflächenabschnitte auf einer Strukturoberfläche angeordnet.

Es ist Aufgabe der Erfindung, eine Beleuchtungseinrichtung der eingangs genannten Art bereitzustellen, die eine gleichmäßige Lichtverteilung über die gesamte Länge ermöglicht, wobei der Platzbedarf und der konstruktive Aufwand für die Beleuchtungseinrichtung verhältnismäßig gering ist.

Diese Aufgabe wird durch den Gegenstand gemäß dem Patentanspruch 1 gelöst.

Gemäß der Erfindung ist vorgesehen, dass die Oberflächenabschnitte als gekrümmte und ebene Oberflächenabschnitte ausgebildet sind, wobei die gekrümmten und ebenen Oberflächenabschnitte zumindest abschnittsweise abwechselnd entlang der Längsachse des Lichtleiters auf der Strukturoberfläche angeordnet sind, und der Lichtleiter eine langgestreckte Reflexionsfläche aufweist, die sich parallel zur Längsachse des Lichtleiters erstreckt und gegenüber der Strukturoberfläche angeordnet ist, wobei die Reflexionsfläche und die Lichtaustrittsfläche einen Winkel von 45° bilden.

Der Kern der Erfindung liegt darin, dass einerseits die Lichtaustrittsfläche sich über die gesamte Länge der Beleuchtungseinrichtung erstreckt und andererseits der Lichtleiter langgestreckt ausgebildet ist. Außerdem ist die Lichtquelle in einem Endbereich des Lichtleiters angeordnet. Der Platzbedarf für die Beleuchtungseinrichtung ist somit relativ gering. Die Strukturoberfläche ermöglicht eine gewünschte Lichtverteilung. Damit lässt sich beispielsweise eine gleichmäßige Lichtverteilung über die gesamte Länge der Beleuchtungseinrichtung erreichen. Ebenso besteht die Möglichkeit, zumindest einen Teil des Lichts gezielt an der Strukturoberfläche aus dem Lichtleiter auszukoppeln.

Gemäß der Erfindung sind die Oberflächenabschnitte gekrümmt und eben ausgebildet. Damit lassen sich zahlreiche physikalische Effekte nutzen, um die gewünschte Ausbreitung der Lichtstrahlen zu erreichen. Dabei spielt insbesondere der Brechungsindex des Materials, aus dem der Lichtleiter hergestellt ist, eine entscheidende Rolle. Ein wesentlicher Teil des von der Lichtquelle abgestrahlten Lichts breitet sich etwa parallel zur Strukturoberfläche innerhalb des Lichtleiters aus. Je nach dem, ob an der Strukturoberfläche der Grenzwinkel der Totalreflexion über- oder unterschritten wird, werden die Lichtstrahlen aus dem Lichtleiter ausgekoppelt oder verbleiben innerhalb des Lichtleiters. Somit ist durch die Materialauswahl für den Lichtleiter und die geometrische Ausgestaltung der Strukturoberfläche die weitere Ausbreitung des Lichts beeinflussbar.

Gemäß der Erfindung sind die Oberflächenabschnitte auf der Strukturoberfläche zumindest abschnittsweise hintereinander entlang der Längsachse des Lichtleiters angeordnet. Dazu sind vorzugsweise die Oberflächenabschnitte ungleichmäßig voneinander beabstandet. Insbesondere nehmen die Abstände zwischen benachbarten Oberflächenabschnitten zur Mitte des Lichtleiters hin entlang dessen Längsachse ab. Dabei kann auch die Länge der einzelnen Oberflächenabschnitte zur Mitte des Lichtleiters hin abnehmen. Eine solche Anordnung der Oberflächenabschnitte ermöglicht die gewünschte gleichmäßige Lichtverteilung.

Gemäß der Erfindung sind die gekrümmten und ebenen Oberflächenabschnitte zumindest abschnittsweise abwechselnd entlang der Längsachse des Lichtleiters auf der Strukturoberfläche angeordnet. Bei dieser Konstellation können gezielt physikalische Effekte genutzt werden, um den Verlauf der Lichtstrahlen zu beeinflussen. Es ist beispielsweise möglich, dass ein Lichtstrahl in einem ersten Oberflächenabschnitt den Lichtleiter verlässt, aber dabei zum Lichtleiter hin gebrochen wird, um anschließend durch einen zweiten Oberflächenabschnitt wieder in den Lichtleiter einzudringen.

Insbesondere ist vorgesehen, dass der Abstand zwischen der Strukturoberfläche und der Lichtaustrittsfläche mit zunehmender Entfernung von der Lichtquelle abnimmt. Dies trägt dazu bei, dass sich die Lichtintensität gleichmäßig über die Lichtaustrittsfläche verteilt. Jeder Punkt der Strukturoberfläche kann direkt von der Lichtquelle angestrahlt werden.

Beispielsweise kann vorgesehen sein, dass die Strukturoberfläche entlang der Längsachse des Lichtleiters zumindest abschnittsweise im Wesentlichen treppenförmig ausgebildet ist. Dabei können die Oberflächenabschnitte eben oder gekrümmt ausgebildet sein. Auch eine in etwa wellenförmige Strukturoberfläche kann vorgesehen sein.

Gemäß der Erfindung ist vorgesehen, dass der Lichtleiter eine langgestreckte Reflexionsfläche aufweist, die sich parallel zur Längsachse des Lichtleiters erstreckt. Die Reflexionsfläche ermöglicht einerseits, dass zumindest der wesentliche Teil des Lichts zu Lichtaustrittsfläche hin umgelenkt wird. Andererseits trägt die Reflexionsfläche dazu bei, dass das Licht gleichmäßig verteilt wird.

Gemäß der Erfindung ist vorgesehen, dass die Reflexionsfläche und die Lichtaustrittsfläche einen Winkel von etwa 45° bilden, wobei die Reflexionsfläche gegenüber der Strukturoberfläche angeordnet ist. Dies trägt zur Optimierung der Lichtausbeute und zur Verbesserung der Lichtverteilung bei.

Gemäß der Erfindung is vorgesehen, dass der Lichtleiter zwischen der wenigstens einen Lichtquelle und der Lichtaustrittsfläche wenigstens eine Freisparung aufweist. Durch die Freisparung wird verhindert, dass das Licht direkt von der Lichtquelle zur Lichtaustrittsfläche gelangt. Auf diese Weise lassen sich unerwünschte Lichthöfe vermeiden.

Gemäß der Erfindung is vorgesehen, dass der Lichtleiter innerhalb der Freisparung eine weitere Strukturoberfläche aufweist. Dies trägt insbesondere dazu bei, dass auch in den Endbereichen der Lichtaustrittsfläche eine gleichmäßige Lichtverteilung erreicht wird.

Bei der bevorzugten Ausführungsform ist vorgesehen, dass an den beiden Endbereichen des Lichtleiters jeweils wenigstens eine Lichtquelle angeordnet ist. Durch die wenigstens zwei Lichtquellen, die jeweils an den beiden Endbereichen des Lichtleiters angeordnet sind, wird die Lichtausbeute bei einem geringen konstruktiven Aufwand optimiert.

Vorzugsweise kann vorgesehen sein, dass der Lichtleiter symmetrisch bezüglich einer Ebene ausgebildet ist, die stich senkrecht zur Längsachse des Lichtleiters erstreckt. Die symmetrische Ausgestaltung des Lichtleiters ermöglicht auf einfache Weise auch eine symmetrische Lichtverteilung. Auch in ästhetischer Hinsicht ist ein symmetrischer Lichtleiter vorteilhaft.

Bei einer speziellen Ausführungsform kann vorgesehen sein, dass die Lichtaustrittsfläche eine Oberflächenstruktur aufweist. Die Oberflächenstruktur auf der Lichtaustrittsfläche trägt zu einer gleichmäßigeren Lichtverteilung bei.

Vorzugsweise kann vorgesehen sein, dass die Strukturoberfläche wenigstens eine aufgebrachte, insbesondere auflackierte oder aufgedruckte Schicht aufweist. Durch die optischen Eigenschaften der aufgebrachten Schicht kann das Verhalten der Lichtstrahlen, die insbesondere vom Inneren des Lichtleiters auf die Strukturoberfläche auftreffen, wesentlich beeinflusst werden. Dabei spielen die Absorptions-, Transmissions-, Reflexions- und Dispersionseigenschaften der aufgebrachten Schicht eine entscheidende Rolle.

Bei einer weiteren Ausführungsform kann vorgesehen sein, dass die Reflexionsfläche eine Oberflächenstruktur und/oder wenigstens eine aufgebrachte, insbesondere auflackierte und/oder aufgedruckte Schicht aufweist. Damit besteht einerseits die Möglichkeit, den Reflexionsanteil innerhalb des Lichtleiters auf der Reflexionsfläche zu erhöhen und damit die Lichtausbeute zu verbessern. Andererseits besteht auch die Möglichkeit, zumindest einen Teil des Lichts, das auf die Reflexionsfläche trifft, gezielt aus dem Lichtleiter auszukoppeln. Damit besteht die Möglichkeit, beispielsweise mit einem Reflektor außerhalb des Lichtleiters, eine gewünschte Lichtverteilung zu erhalten.

Zusätzlich kann vorgesehen sein, dass die Beleuchtungseinrichtung wenigstens einen Reflektor ausweist. Mit dem Reflektor kann Licht, das an der Strukturoberfläche, Reflexionsfläche oder einer anderen Oberfläche des Lichtleiters ausgekoppelt wird, in eine gewünschte Richtung und mit einer gewünschten Intensitätsverteilung umgelenkt werden.

Dazu ist vorzugsweise vorgesehen, dass die Beleuchtungseinrichtung einen langgestreckten Reflektor ausweist, der sich etwa parallel zur Längsachse des Lichtleiters erstreckt. Mit dem langgestreckten Reflektor kann bei geringem konstruktiven Aufwand das aus dem Lichtleiter ausgekoppelte Licht besonders gleichmäßig verteilt werden.

Gemäß der Erfindung ist vorgeschen dass die wenigstens eine Lichtquelle innerhalb des Lichtleiters in einer Ausnehmung angeordnet ist. Vorzugsweise ist die Ausnehmung als Sackloch im Lichtleiter ausgebildet. Dadurch gelangt das von der Lichtquelle ausgehende Licht im Wesentlichen vollständig in den Lichtleiter.

Vorzugsweise kann vorgesehen sein, dass die wenigstens eine Lichtquelle als lichtemittierende Diode (LED) ausgebildet ist. Die lichtemittierende Diode ermöglicht eine Lichterzeugung bei geringem Energieaufwand. Außerdem kann durch Auswahl der lichtemittierenden Diode ein Licht mit einer bestimmten Farbe erzeugt werden.

Weiterhin ist gemäß der Erfindung eine Beleuchtungsvorrichtung vorgesehen, die eine Vielzahl der oben beschriebenen Beleuchtungseinrichtungen aufweist. Damit kann aus mehreren Beleuchtungseinrichtungen eine Beleuchtungsvorrichtung zusammengesetzt werden, die an die räumlichen Gegebenheiten des zu beleuchtenden Bereichs angepasst ist.

Bei der Anordnung mehrerer Beleuchtungseinrichtungen kann vorgesehen sein, dass die Beleuchtungseinrichtungen parallel zueinander angeordnet sind. Damit lässt sich eine vorgegebene Fläche gleichmäßig ausleuchten.

Außerdem ist gemäß der Erfindung ein Lichtleiter für die oben beschriebene Beleuchtungseinrichtung und/oder Beleuchtungsvorrichtung vorgesehen.

Der Lichtleiter gemäß der Erfindung ist langgestreckt ausgebildet und umfasst wenigstens eine Ausnehmung in zumindest einem der Endbereiche des Lichtleiters zur Aufnahme wenigstens einer Lichtquelle, eine langgestreckte Lichtaustrittsfläche, die sich an einer Längsseite des Lichtleiters parallel zu dessen Längsachse und über dessen gesamte Länge erstreckt, und eine Strukturoberfläche, die sich an einer weiteren Längsseite des Lichtleiters erstreckt und sich nach einem vorbestimmten Schema aus einer Vielzahl von gekrümmten und ebenen Oberflächenabschnitten zusammensetzt, die zumindest abschnittsweise abwechselnd und hintereinander entlang einer Längsachse des Lichtleiters auf der Strukturoberfläche angeordnet sind.

Der erfindungsgemäße Lichtleiter zeichnet sich insbesondere dadurch aus, dass einerseits die Lichtaustrittsfläche sich über die gesamte Länge des Lichtleiters erstreckt und andererseits der Lichtleiter langgestreckt ausgebildet ist. Die Strukturoberfläche ermöglicht eine gewünschte Lichtverteilung. Die Ausnehmung in dem Endbereich des Lichtleiters zur Aufnahme wenigstens einer Lichtquelle ermöglicht eine gleichmäßige Lichtverteilung über die gesamte Länge des Lichtleiters. Weiterhin besteht die Möglichkeit, zumindest einen Teil des Lichts gezielt aus dem Lichtleiter auszukoppeln.

Alternativ zur Reflexionsfläche des Lichtleiters kann vorgesehen sein, dass der Lichtleiter eine Verbreiterung aufweist, die als langgestrecktes Flächenstück ausgebildet ist. Dadurch verteilt sich das Licht auch innerhalb der Verbreiterung, was zu einer gleichmäßigen Lichtverteilung beiträgt.

Vorzugsweise ist die Verbreiterung in etwa parallel zu der Lichtaustrittsfläche sowie zwischen der Strukturoberfläche und der Lichtaustrittsfläche angeordnet. Dabei kann die Verbreiterung einstückig mit dem Lichtleiter ausgebildet sein.

Insbesondere ist vorgesehen, dass die Verbreiterung sich über die gesamte Länge des Lichtleiters erstreckt. Dies trägt wesentlich zu der gleichmäßigen Lichtverteilung bei.

Der erfindungsgemäße Lichtleiter ist insbesondere für die oben beschriebene Beleuchtungseinrichtung vorgesehen.

Weitere Merkmale, Vorteile und besondere Ausführungsformen der Erfindung sind Gegenstand der Unteransprüche.

Nachstehend wird die erfindungsgemäße Beleuchtungseinrichtung am Beispiel einer bevorzugten Ausführungsform unter Bezugnahme auf die beigefügten Zeichnungen näher erläutert. Es zeigen:
- FIG. 1: eine schematische Vorderansicht einer ersten Ausführungsform der erfindungsgemäßen Beleuchtungseinrichtung;
- FIG. 2: eine schematische Seitenansicht der ersten Ausführungsform der Beleuchtungseinrichtung gemäß FIG. 1;
- FIG. 3: eine Detailansicht eines Bereichs der Beleuchtungseinrichtung gemäß FIG. 2;
- FIG. 4: eine Detailansicht eines Bereichs A der Beleuchtungseinrichtung gemäß FIG. 1;
- FIG. 5: eine Detailansicht eines Bereichs B der Beleuchtungseinrichtung gemäß FIG. 1;
- FIG. 6: eine schematische Vorderansicht einer zweiten Ausführungsform der erfindungsgemäßen Beleuchtungseinrichtung;
- FIG. 7: eine schematische Ansicht der Unterseite der zweiten Ausführungsform der Beleuchtungseinrichtung; und
- FIG. 8: eine schematische Seitenansicht der zweiten Ausführungsform der Beleuchtungseinrichtung gemäß FIG. 6.

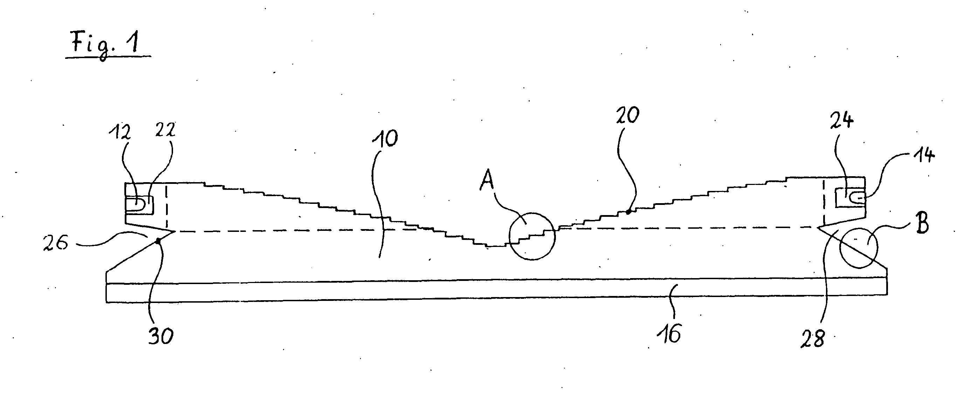

FIG. 1 zeigt eine Vorderansicht einer ersten Ausführungsform der erfindungsgemäßen Beleuchtungseinrichtung. Die Beleuchtungseinrichtung umfasst einen langgestreckten Lichtleiter 10 und zwei Lichtquellen 12 und 14, die in den Endbereichen des Lichtleiters 10 angeordnet sind. In dem einen Endbereich des Lichtleiters 10 befindet sich eine erste Ausnehmung 22, in der die erste Lichtquelle 12 angeordnet ist. In dem anderen Endbereich des Lichtleiters 10 befindet sich eine zweite Ausnehmung 24, in der die zweite Lichtquelle 14 angeordnet ist. Die Ausnehmungen 22 und 24 sind jeweils als Sackloch innerhalb des Lichtleiters 10 angeordnet. Die Lichtquellen 12 und 14 sind in dieser konkreten Ausführungsform als lichtemittierende Dioden (LED) ausgebildet.

An einer Längsseite des Lichtleiters 10 befindet sich eine langgestreckte Lichtaustrittsfläche 16, die sich parallel zur Längsachse des Lichtleiters 10 erstreckt. Die Lichtaustrittsfläche 16 erstreckt sich in FIG. 1 parallel zur Zeichnungsebene. Hinter der Lichtaustrittsfläche 16 befindet sich eine langgestreckte Reflexionsfläche 18, die in FIG. 1 nicht dargestellt ist. Die Lichtaustrittsfläche 16 und die Reflexionsfläche 18 bilden einen Winkel von 45°.

Die gegenüber der Reflexionsfläche 18 angeordnete Längsseite des Lichtleiters 10 umfasst eine Strukturoberfläche 20. Die Strukturoberfläche 20 ist im Wesentlichen senkrecht zur Lichtaustrittsfläche 16 angeordnet. Der Abstand zwischen der Strukturoberfläche 20 und der Lichtaustrittsfläche 16 bzw. Reflexionsfläche 18 nimmt mit zunehmender Entfernung von der Lichtquelle 12 bzw. 14 ab, so dass die Querschnittsfläche des Lichtleiters 10 in dessen Mitte am kleinsten ist. Die Strukturoberfläche 20 ist entlang der Längsachse des Lichtleiters 10 etwa treppenförmig ausgebildet. Die Strukturoberfläche 20 setzt sich aus einer Vielzahl von ersten Oberflächenabschnitten 32 und zweiten Oberflächenabschnitten 34 zusammen, die hintereinander entlang der Längsachse des Lichtleiters 10 angeordnet sind. Die ersten Oberflächenabschnitte 32 sind gekrümmt ausgebildet. Die zweiten Oberflächenabschnitte 34 sind dagegen ebene Flächen. Bei der Strukturoberfläche 20 sind abwechselnd gekrümmte Oberflächenabschnitte 32 und ebene Oberflächenabschnitte 34 in Reihe angeordnet. Die Oberflächenabschnitte 32 und 34 sind ungleichmäßig voneinander beabstandet. Die Abstände zwischen benachbarten Oberflächenabschnitten 32 bzw. 34 nehmen von außen nach innen ab. Außerdem nimmt auch die Größe, d.h. die Länge in Richtung des Lichtleiters 10, der ebenen oberflächenabschnitte 34 von außen nach innen ab.

Das von Lichtquellen 12 und 14 abgestrahlte Licht wird an der Strukturoberfläche 20 derart umgelenkt, dass der wesentliche Teil des Lichts über die Reflexionsfläche 18 möglichst gleichmäßig verteilt auf die Lichtaustrittsfläche 16 trifft und von dort aus dem Lichtleiter 10 austritt. Dies ermöglich eine gleichmäßige und homogene Ausleuchtung des zu beleuchtenden Bereichs.

Zwischen der Lichtquelle 12 und der Lichtaustrittsfläche 16 befindet sich eine erste Freisparung 26. Zwischen der Lichtquelle 14 und der Lichtaustrittsfläche 16 befindet sich eine zweite Freisparung 28. Die Freisparungen 26 und 28 sind jeweils von einer zweiten Strukturoberfläche 30 begrenzt. An den zweiten Strukturoberflächen 30 wird insbesondere das Licht von den jeweils gegenüberliegenden Lichtquellen 12 bzw. 14 möglichst gleichmäßig verteilt und über die Reflexionsfläche 18 zur Lichtaustrittsfläche 16 hin umgelenkt. Die Lichtaustrittsfläche 16 kann auch eine Oberflächenstruktur aufweisen. Dies trägt zusätzlich zu einer gleichmäßigen Lichtverteilung in dem zu beleuchtenden Bereich bei.

Alternativ besteht die Möglichkeit, die Strukturoberfläche 20 derart auszubilden, dass zumindest ein Teil des Lichts, das von den Lichtquellen 12 und 14 erzeugt wird, an der Strukturoberfläche 20 aus dem Lichtleiter 10 ausgekoppelt wird. Dies lässt sich beispielsweise mit einer aufgebrachten, insbesondere auflackierten oder aufgedruckten Schicht auf der Strukturoberfläche 20 erreichen. Das ausgekoppelte Licht kann beispielsweise über einen Reflektor auf die zu beleuchtende Fläche umgelenkt werden.

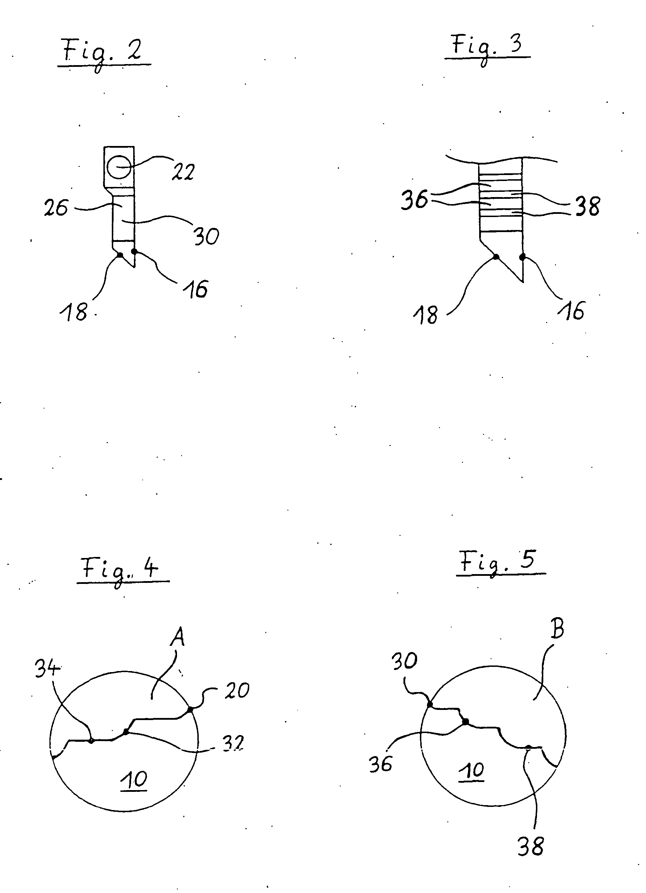

In FIG. 2 ist eine schematische Seitenansicht der ersten Ausführungsform der Beleuchtungseinrichtung aus FIG. 1 dargestellt. Die Lichtaustrittsfläche 16 und die Reflexionsfläche 18 erstrecken sich senkrecht zur Zeichnungsebene in FIG. 2. Die Lichtaustrittsfläche 16 und die Reflexionsfläche 18 bilden einen Winkel von 45°. Zwischen der Ausnehmung 22 für die Lichtquelle 12 und der Lichtaustrittsfläche 16 befindet sich die Freisparung 26, die von der zweiten Strukturoberfläche 30 begrenzt ist.

FIG. 3 zeigt eine Detailansicht von einem Bereich der Seitenansicht der Beleuchtungseinrichtung gemäß FIG. 2. Die Detailansicht zeigt den Bereich mit der Lichtaustrittsfläche 16, der Reflexionsfläche 18 und dem unteren Bereich der Freisparung 26. Die zweite Strukturoberfläche 30 setzt sich aus einer Vielzahl von dritten Oberflächenabschnitten 36 und vierten Oberflächenabschnitten 38 zusammen, die abwechselnd in Reihe auf der zweiten Strukturoberfläche 30 angeordnet sind. Die dritten Oberflächenabschnitte 36 sind gekrümmt ausgebildet. Die vierten Oberflächenabschnitte 38 sind eben.

FIG. 4 zeigt eine Detailansicht eines Bereichs A der Beleuchtungseinrichtung, der in FIG. 1 gekennzeichnet ist. Dabei handelt es sich um einen detaillierten Ausschnitt der ersten Strukturoberfläche 20. Die erste Strukturoberfläche 20 erstreckt sich nahezu über die gesamte Längsseite des Lichtleiters 10, die sich gegenüber der Reflexionsfläche 18 befindet. Die erste Strukturoberfläche 20 setzt sich aus der Vielzahl von ersten Oberflächenabschnitten 32 und zweiten Oberflächenabschnitten 34 zusammen, die abwechselnd hintereinander auf der ersten Strukturoberfläche 20 angeordnet sind. Die ersten Oberflächenabschnitte 32 sind gekrümmt ausgebildet, während die zweiten Oberflächenabschnitte 34 eben sind.

Die geometrische Ausgestaltung der ersten Strukturoberfläche 20 ermöglicht, dass der wesentliche Teil des von den Lichtquellen 12 und 14 erzeugten Lichts innerhalb des Lichtleiters 10 verbleibt und anschließend im Wesentlichen gleichmäßig verteilt über die Reflexionsfläche 18 auf die Lichtaustrittsfläche 16 trifft und von dort aus dem Lichtleiter 10 austritt.

FIG. 5 zeigt eine Detailansicht eines Bereichs B der Beleuchtungseinrichtung, der in FIG. 1 gekennzeichnet ist. Dabei handelt es sich um einen detaillierten Ausschnitt der zweiten Strukturoberfläche 30. Die zweiten Strukturoberfläche 30 erstreckt sich über den gesamten Innenraum der Freisparungen 26 und 28. Der in FIG. 5 dargestellte Ausschnitt der zweiten Strukturoberfläche 30 befindet sich zwischen der Freisparung 28 und der Lichtaustrittsfläche 16. Die zweite Strukturoberfläche 30 setzt sich aus der Vielzahl von dritten Oberflächenabschnitten 36 und vierten.Oberflächenabschnitten 38 zusammen, die abwechselnd hintereinander auf der zweiten Strukturoberfläche 30 angeordnet sind. Die dritten Oberflächenabschnitte 36 sind gekrümmt ausgebildet, während die vierten Oberflächenabschnitte 38 eben sind.

Die geometrische Ausgestaltung der zweiten Strukturoberfläche 30 trägt dazu bei, dass der wesentliche Teil des Lichts innerhalb des Lichtleiters 10 verbleibt und möglichst gleichmäßig verteilt auf die Lichtaustrittsfläche 16 trifft und von dort aus dem Lichtleiter 10 austritt.

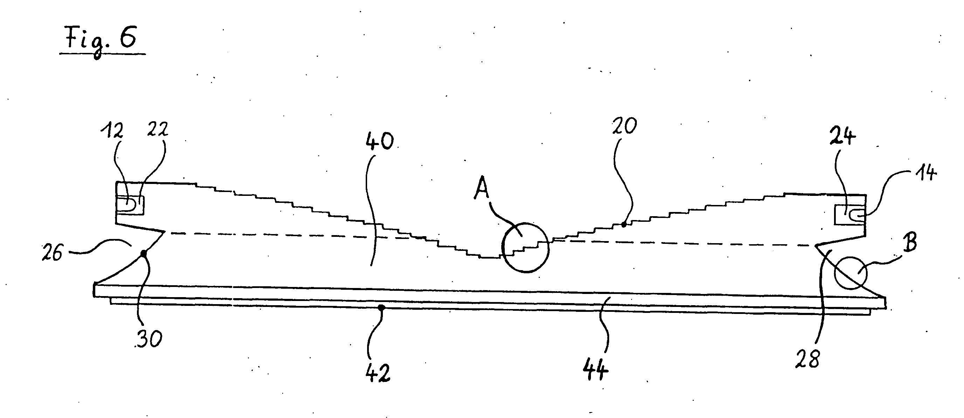

FIG. 6 zeigt eine Vorderansicht einer zweiten Ausführungsform der erfindungsgemäßen Beleuchtungseinrichtung. Gleiche oder vergleichbare Bauteile haben die gleichen Bezugszeichen wie bei der ersten Ausführungsform gemäß FIG. 1. Die Beleuchtungseinrichtung umfasst einen langgestreckten Lichtleiter 40 und zwei Lichtquellen 12 und 14, die in den Endbereichen des Lichtleiters 40 angeordnet sind. In dem einen Endbereich des Lichtleiters 40 befindet sich die erste Ausnehmung 22, in der die erste Lichtquelle 12 angeordnet ist. In dem anderen Endbereich des Lichtleiters 40 befindet sich die zweite Ausnehmung 24, in der die zweite Lichtquelle 14 angeordnet ist. Die Ausnehmungen 22 und 24 sind jeweils als Sackloch innerhalb des Lichtleiters 10 angeordnet. Die Lichtquellen 12 und 14 sind auch in dieser konkreten Ausführungsform als lichtemittierende Dioden (LED) ausgebildet.

An einer Längsseite des Lichtleiters 40 befindet sich eine langgestreckte Lichtaustrittsfläche 42, die sich parallel zur Längsachse des Lichtleiters 40 erstreckt. Die Lichtaustrittsfläche 42 erstreckt sich in FIG. 6 im Wesentlichen senkrecht zur Zeichnungsebene.

Die gegenüber der Lichtaustrittsfläche 42 angeordnete Längsseite des Lichtleiters 40 weist die Strukturoberfläche 20 auf. Die Strukturoberfläche 20 ist im Wesentlichen parallel zur Lichtaustrittsfläche 42 angeordnet. Der Abstand zwischen der Strukturoberfläche 20 und der Lichtaustrittsfläche 42 nimmt mit zunehmender Entfernung von der Lichtquelle 12 bzw. 14 ab, so dass die Querschnittsfläche des Lichtleiters 40 in dessen Mitte am kleinsten ist. Die Strukturoberfläche 20 ist entlang der Längsachse des Lichtleiters 40 etwa treppenförmig ausgebildet und setzt sich aus der Vielzahl von ersten Oberflächenabschnitten 32 und zweiten Oberflächenabschnitten 34 zusammen, die hintereinander entlang der Längsachse des Lichtleiters 40 angeordnet sind. Die ersten Oberflächenabschnitte 32 sind gekrümmt ausgebildet, während die zweiten Oberflächenabschnitte 34 ebene Flächen sind.

Bei der Strukturoberfläche 20 sind abwechselnd gekrümmte Oberflächenabschnitte 32 und ebene Oberflächenabschnitte 34 in Reihe angeordnet. Der in FIG. 6 mit A gekennzeichnete Bereich der Strukturoberfläche 20 entspricht ebenfalls der detaillierten Darstellung gemäß FIG. 4. Die Oberflächenabschnitte 32 und 34 sind auch bei der zweiten Ausführungsform ungleichmäßig voneinander beabstandet. Die Abstände zwischen benachbarten Oberflächenabschnitten 32 bzw. 34 nehmen von außen nach innen ab. Außerdem nimmt auch die Länge in Richtung der Längsachse bei den ebenen Oberflächenabschnitten 34 von außen nach innen ab.

Das von Lichtquellen 12 und 14 abgestrahlte Licht wird an der Strukturoberfläche 20 derart umgelenkt, dass der wesentliche Teil des Lichts möglichst gleichmäßig verteilt auf die Lichtaustrittsfläche 42 trifft und von dort aus dem Lichtleiter 40 austritt. Dies ermöglicht eine gleichmäßige und homogene Ausleuchtung des zu beleuchtenden Bereichs.

Zwischen der Lichtquelle 12 und der Lichtaustrittsfläche 42 befindet sich die erste Freisparung 26. Zwischen der Lichtquelle 14 und der Lichtaustrittsfläche 42 befindet sich die zweite Freisparung 28. Die Freisparungen 26 und 28 sind jeweils von der zweiten Strukturoberfläche 30 begrenzt. An den zweiten Strukturoberflächen 30 wird insbesondere das Licht von den jeweils gegenüberliegenden Lichtquellen 12 bzw. 14 möglichst gleichmäßig verteilt und zur Lichtaustrittsfläche 42 hin umgelenkt. Die Lichtaustrittsfläche 42 kann auch eine Oberflächenstruktur aufweisen. Dies trägt zusätzlich zu einer gleichmäßigen Lichtverteilung in dem zu beleuchtenden Bereich bei.

Die zweite Ausführungsform unterscheidet sich von der ersten Ausführungsform dadurch, dass sie einerseits eine Verbreiterung 44 umfasst und andererseits jedoch keine Reflexionsfläche 18 aufweist. Die Verbreiterung 44 ist in dieser konkreten Ausführungsform einstückig mit dem Lichtleiter 40 ausgebildet. Die Verbreiterung 44 hat die Form eines Flächenstücks und ist parallel zur Lichtaustrittsfläche 42 angeordnet. Zwischen der Strukturoberfläche 20 und der Lichtaustrittsfläche 42 ist die Verbreiterung 44 knapp oberhalb der Lichtaustrittsfläche 42 angeordnet.

Alternativ besteht auch bei dieser Ausführungsform die Möglichkeit, die Strukturoberfläche 20 derart auszubilden, dass zumindest ein Teil des Lichts, das von den Lichtquellen 12 und 14 erzeugt wird, an der Strukturoberfläche 20 aus dem Lichtleiter 10 ausgekoppelt wird. Dies lässt sich beispielsweise mit einer aufgebrachten, insbesondere auflackierten oder aufgedruckten Schicht auf der Strukturoberfläche 20 erreichen. Das ausgekoppelte Licht kann beispielsweise über einen Reflektor auf die zu beleuchtende Fläche umgelenkt werden.

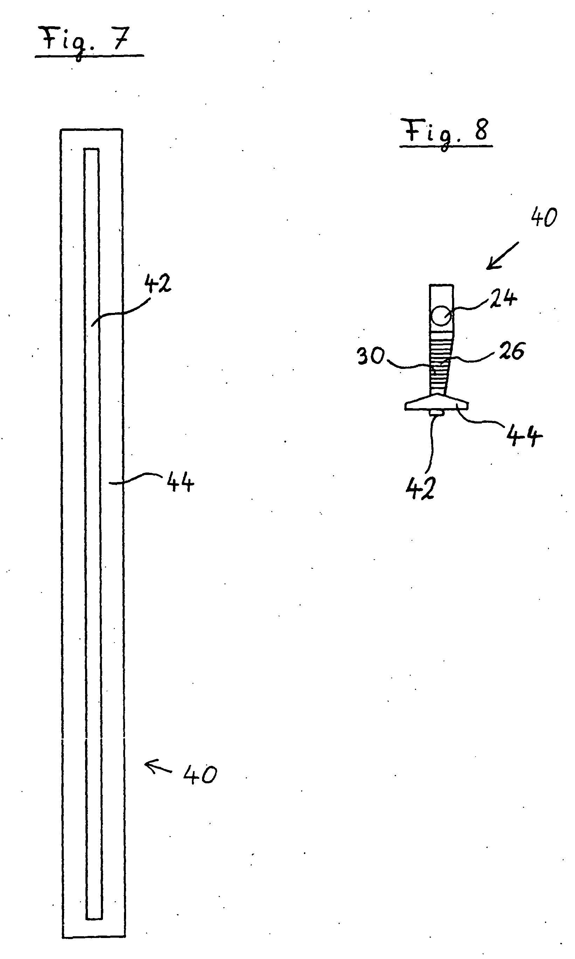

In FIG. 7 ist eine schematische Ansicht der Unterseite der zweiten Ausführungsform des Lichtleiters 40 dargestellt. FIG. 7 verdeutlicht insbesondere die Größenverhältnisse der Lichtaustrittsfläche 42 und der Verbreiterung 44. Die Verbreiterung 44 erstreckt sich über die gesamte Länge des Lichtleiters 40.

FIG. 8 zeigt eine schematische Seitenansicht der zweiten Ausführungsform der Beleuchtungseinrichtung aus FIG. 6. Die Lichtaustrittsfläche 42 erstreckt sich in etwa senkrecht zur Zeichnungsebene in FIG. 8. Zwischen der Ausnehmung 24 für die Lichtquelle 14 und der Lichtaustrittsfläche 42 befindet sich die Freisparung 26, die von der zweiten Strukturoberfläche 30 begrenzt ist. Geringfügig oberhalb der Lichtaustrittsfläche 42 ist die Verbreiterung 44 angeordnet.

Die geometrische Ausgestaltung der zweiten Strukturoberfläche 30 trägt dazu bei, dass der wesentliche Teil des Lichts innerhalb des Lichtleiters 40 verbleibt und möglichst gleichmäßig verteilt auf die Lichtaustrittsfläche 42 trifft und von dort aus dem Lichtleiter 40 austritt.

Mit der Beleuchtungseinrichtung und dem Lichtleiter gemäß der Erfindung lässt sich mit wenigen Lichtquellen und somit geringem Strombedarf eine gleichmäßige Ausleuchtung erreichen. Der Platzbedarf ist verhältnismäßig gering, was insbesondere auf die Reflexionsfläche 18 zurück zu führen ist. Die Freisparungen 26 und 28 verhindern insbesondere sorgenannte Lichthöfe. Ein Reflektor kann die Lichtausbeute erhöhen, wenn Licht aus dem Lichtleiter 10 bzw. 40 ausgekoppelt wird.

### Bezugszeichenliste

- 10: Lichtleiter
- 12: erste Lichtquelle
- 14: zweite Lichtquelle
- 16: Lichtaustrittsfläche
- 18: Reflexionsfläche
- 20: erste Strukturoberfläche
- 22: erste Ausnehmung
- 24: zweite Ausnehmung
- 26: erste Freisparung
- 28: zweite Freisparung
- 30: zweite Strukturoberfläche
- 32: erster Oberflächenabschnitt
- 34: zweiter Oberflächenabschnitt
- 36: dritter Oberflächenabschnitt
- 38: vierter Oberflächenabschnitt
- 40: Lichtleiter
- 42: Lichtaustrittsfläche
- 44: Verbreiterung

## Patentansprüche

1. Beleuchtungseinrichtung, die einen langgestreckten Lichtleiter (10; 40) und wenigstens eine Lichtquelle (12, 14) aufweist, wobei
- die Lichtquelle (12, 14) in einem Endbereich des Lichtleiters (10; 40) angeordnet ist,
- eine Längsseite des Lichtleiters (10) eine langgestreckte Lichtaustrittsfläche (16; 42) aufweist, die sich parallel zur Längsachse des Lichtleiters (10; 40) über dessen gesamte Länge erstreckt, und
- eine weitere Längsseite des Lichtleiters (10; 40) eine Strukturoberfläche (20) aufweist, die sich nach einem vorbestimmten Schema aus einer Vielzahl von Oberflächenabschnitten (32, 34) zusammensetzt, und wobei
- die Oberflächenabschnitte (32, 34) auf der Strukturoberfläche (20) zumindest abschnittsweise hintereinander entlang der Längsachse des Lichtleiters (10; 40) angeordnet sind,
**dadurch gekennzeichnet, dass**
- die Oberflächenabschnitte als gekrümmte (32) und ebene (34) Oberflächenabschnitte ausgebildet sind, wobei die gekrümmten (32) und ebenen (34) Oberflächenabschnitte zumindest abschnittsweise abwechselnd entlang der Längsachse des Lichtleiters (10; 40) auf der Strukturoberfläche (20) angeordnet sind,
- der Lichtleiter (10) eine langgestreckte Reflexionsfläche (18) aufweist, die sich parallel zur Längsachse des Lichtleiters (10) erstreckt und gegenüber der Strukturoberfläche (20) angeordnet ist, wobei die Reflexionsfläche (18) und die Lichtaustrittsfläche (16) einen Winkel von 45° bilden,
- dass der Lichtleiter (10; 40) zwischen der wenigstens einen Lichtquelle (12, 14) und der Lichtaustrittsflache (16; 42) wenigstens eine Freisparung (26, 28) aufweist,
- dass der Lichtleiter (10; 40) innerhalb der Freisparung (26, 28) eine weitere Strukturoberfläche (30) aufweist und dass
- die wenigstens eine Lichtquelle (12, 14) innerhalb des Lichtleiters (10; 40) in einer Ausnehmung (22, 24) angeordnet ist.

2. Beleuchtungseinrichtung nach Anspruch 1,
**dadurch gekennzeichnet, dass**
der Abstand zwischen der Strukturoberfläche (20) und der Lichtaustrittsfläche (16; 42) mit zunehmender Entfernung von der Lichtquelle (12, 14) abnimmt.

3. Beleuchtungseinrichtung nach Anspruch 1 oder 2,
**dadurch gekennzeichnet, dass**
die Strukturoberfläche (20) entlang der Längsachse des Lichtleiters (10; 40) zumindest abschnittsweise im Wesentlichen treppenförmig ausgebildet ist.

4. Beleuchtungseinrichtung nach einem der vorhergehenden Ansprüche,
**dadurch gekennzeichnet, dass**
an den beiden Endbereichen des Lichtleiters (10; 40) jeweils wenigstens eine Lichtquelle (12, 14) angeordnet ist.

5. Beleuchtungseinrichtung nach Anspruch 4,
**dadurch gekennzeichnet, dass**
der Lichtleiter (10; 40) symmetrisch bezüglich einer Ebene ausgebildet ist, die sich senkrecht zur Längsachse des Lichtleiters (10; 40) erstreckt.

6. Beleuchtungseinrichtung nach einem der vorhergehenden Ansprüche,
**dadurch gekennzeichnet, dass**
die Lichtaustrittsfläche (16; 42) eine Oberflächenstruktur aufweist.

7. Beleuchtungseinrichtung nach einem der vorhergehenden Ansprüche,
**dadurch gekennzeichnet, dass**
die Strukturoberfläche (20, 30) wenigstens eine aufgebrachte, insbesondere auflackierte oder aufgedruckte Schicht aufweist.

8. Beleuchtungseinrichtung nach einem der vorhergehenden Ansprüche,
**dadurch gekennzeichnet, dass**
die Reflexionsfläche (18) eine Oberflächenstruktur und/oder wenigstens eine aufgebrachte, insbesondere auflackierte oder aufgedruckte Schicht aufweist.

9. Beleuchtungseinrichtung nach einem der vorhergehenden Ansprüche,
**dadurch gekennzeichnet, dass**
die Beleuchtungseinrichtung wenigstens einen Reflektor ausweist.

10. Beleuchtungseinrichtung nach Anspruch 9,
**dadurch gekennzeichnet, dass**
die Beleuchtungseinrichtung einen langgestreckten Reflektor aufweist, der sich parallel zur Längsachse des Lichtleiters (10; 40) erstreckt.

11. Beleuchtungseinrichtung nach einem der vorhergehenden Ansprüche,
**dadurch gekennzeichnet, dass**
die wenigstens eine Lichtquelle (12, 14) als lichtemittierende Diode (LED) ausgebildet ist.

12. Beleuchtungsvorrichtung, die eine Vielzahl von Beleuchtungseinrichtungen gemäß einem der Patentansprüche 1 bis 11 aufweist.

13. Beleuchtungsvorrichtung nach Anspruch 12,
**dadurch gekennzeichnet, dass**
die Beleuchtungseinrichtungen parallel zueinander angeordnet sind.

14. Lichtleiter, der für eine Beleuchtungseinrichtung nach einem der Ansprüche 1 bis 11 und/oder für eine Beleuchtungsvorrichtung nach Anspruch 12 oder 13 vorgesehen ist.

## Claims

1. Illumination device which has an elongated optical waveguide (10; 40) and at least one light source (12, 14), wherein
- the light source (12, 14) is arranged in an end region of the optical waveguide (10; 40),
- one longitudinal side of the optical waveguide (10) has an elongated light outlet surface (16; 42) which extends parallel to the longitudinal axis of the optical waveguide (10; 40) over its entire length, and
- a further longitudinal side of the optical waveguide (10; 40) has a structural surface (20) which is composed of a plurality of surface sections (32, 34) according to a predetermined scheme, and wherein
- the surface sections (32, 34) on the structural surface (20) are arranged at least in some sections one behind another along the longitudinal axis of the optical waveguide (10; 40),
**characterised in that**
- the surface sections are designed as curved (32) and flat (34) surface sections, wherein the curved (32) and flat (34) surface sections are arranged on the structural surface (20) at least in some sections alternately along the longitudinal axis of the optical waveguide (10; 40),
- the optical waveguide (10) has an elongated reflection surface (18) which extends parallel to the longitudinal axis of the optical waveguide (10) and is arranged opposite the structural surface (20), wherein the reflection surface (18) and the light outlet surface (16) form an angle of 45°,
- **in that** the optical waveguide (10; 40) has at least one gap (26, 28) between the at least one light source (12, 14) and the light outlet surface (16; 42),
- **in that** the optical waveguide (10; 40) within the gap (26, 28) has a further structural surface (30) and **in that**
- the at least one light source (12, 14) within the optical waveguide (10; 40) is arranged in a recess (22, 24).

2. Illumination device according to claim 1, **characterised in that** the distance between the structural surface (20) and the light outlet surface (16; 42) decreases with increasing distance from the light source (12, 14).

3. Illumination device according to claim 1 or 2, **characterised in that** the structural surface (20) is designed to be essentially stepped at least in some sections along the longitudinal axis of the optical waveguide (10; 40).

4. Illumination device according to one of the preceding claims, **characterised in that** in each case at least one light source (12, 14) is arranged at the two end regions of the optical waveguide (10; 40).

5. Illumination device according to claim 4, **characterised in that** the optical waveguide (10; 40) is designed to be symmetrical with respect to a plane which extends vertically to the longitudinal axis of the optical waveguide (10; 40).

6. Illumination device according to one of the preceding claims, **characterised in that** the light outlet surface (16; 42) has a surface structure.

7. Illumination device according to one of the preceding claims, **characterised in that** the structural surface (20, 30) has at least one applied, in particular lacquered-on or printed-on layer.

8. Illumination device according to one of the preceding claims, **characterised in that** the reflection surface (18) has a surface structure and/or at least one applied, in particular lacquered-on or printed-on layer.

9. Illumination device according to one of the preceding claims, **characterised in that** the illumination device has at least one reflector.

10. Illumination device according to claim 9, **characterised in that** the illumination device has an elongated reflector which extends parallel to the longitudinal axis of the optical waveguide (10; 40).

11. Illumination device according to one of the preceding claims, **characterised in that** the at least one light source (12, 14) is designed as a light-emitting diode (LED).

12. Illumination arrangement which has a plurality of illumination devices according to one of patent claims 1 to 11.

13. Illumination arrangement according to claim 12, **characterised in that** the illumination devices are arranged parallel to one another.

14. Optical waveguide which is provided for an illumination device according to one of claims 1 to 11 and/or for an illumination arrangement according to claim 12 or 13.

## Revendications

1. Dispositif d'éclairage qui comporte un guide de lumière allongé (10 ; 40) et au moins une source lumineuse (12, 14), sachant que
- la source lumineuse (12, 14) est disposée dans une zone d'extrémité du guide de lumière (10 ; 40),
- un côté longitudinal du guide de lumière (10) comporte une surface de sortie de la lumière allongée (16 : 42) qui s'étend de manière parallèle à l'axe longitudinal du guide de lumière (10 ; 40), sur l'ensemble de sa longueur et
- un autre côté longitudinal du guide de lumière (10 ; 40) comporte une superficie structurée (20) qui se compose d'une pluralité de sections de superficie (32, 34) suivant un schéma prédéterminé et sachant que
- les sections de superficie (32, 34) sont agencées, sur la superficie structurée (20), au moins à certains endroits, les unes derrière les autres le long de l'axe longitudinal du guide de lumière (10 ; 40),
**caractérisé en ce que**
- les sections de superficie sont réalisées sous forme de sections de superficie courbées (32) et planes (34), sachant que les sections de superficie courbées (32) et planes (34) sont agencées, au moins à certains endroits, en alternance, le long de l'axe longitudinal du guide de lumière (10 ; 40), sur la superficie structurée (20),
- le guide de lumière (10) comporte une surface de réflexion allongée (18) qui s'étend de manière parallèle à l'axe longitudinal du guide de lumière (10) et est agencée face à la superficie structurée (20), sachant que la surface de réflexion (18) et la surface de sortie de la lumière (16) forment un angle à 45°,
- le guide de lumière (10 ; 40) comporte au moins un évidement (26, 28) entre la ou les sources lumineuses (12, 14) et la surface de sortie de la lumière (16 ; 42),
- le guide de lumière (10 ; 40) comporte une autre superficie structurée (30) à l'intérieur de l'évidement (26 ; 28) et que
- la ou les sources lumineuses (12, 14) sont agencées dans une cavité (22, 24), à l'intérieur du guide de lumière (10 ; 40).

2. Dispositif d'éclairage selon la revendication 1, **caractérisé en ce que** la distance entre la superficie structurée (20) et la surface de sortie de la lumière (16 ; 42) diminue avec l'éloignement de la source lumineuse (12, 14).

3. Dispositif d'éclairage selon la revendication 1 ou 2, **caractérisé en ce que** la superficie structurée (20) est réalisée sensiblement à mode de gradins, au moins à certains endroits, le long de l'axe longitudinal du guide de lumière (10 ; 40).

4. Dispositif d'éclairage selon l'une quelconque des revendications précédentes, **caractérisé en ce qu'**on a disposé au moins une source de lumière (12, 14) sur les deux zones d'extrémité du guide de lumière (10 ; 40).

5. Dispositif d'éclairage selon la revendication 4, **caractérisé en ce que** le guide de lumière (10 ; 40) est réalisé de manière symétrique à un plan qui s'étend perpendiculairement à l'axe longitudinal du guide de lumière (10 ; 40).

6. Dispositif d'éclairage selon l'une quelconque des revendications précédentes, **caractérisé en ce que** la surface de sortie de la lumière (16 ; 42) comporte une structure de superficie.

7. Dispositif d'éclairage selon l'une quelconque des revendications précédentes, **caractérisé en ce que** la superficie structurée (20, 30) comporte au moins une couche appliquée, en particulier posée sous forme de vernis ou imprimée.

8. Dispositif d'éclairage selon l'une quelconque des revendications précédentes, **caractérisé en ce que** la surface de réflexion (18) comporte une structure de superficie et/ou au moins une couche appliquée, en particulier posée sous forme de vernis ou imprimée.

9. Dispositif d'éclairage selon l'une quelconque des revendications précédentes, **caractérisé en ce que** le dispositif d'éclairage comporte au moins un réflecteur.

10. Dispositif d'éclairage selon la revendication 9, **caractérisé en ce que** le dispositif d'éclairage comporte un réflecteur allongé qui s'étend de manière parallèle à l'axe longitudinal du guide de lumière (10 ; 40).

11. Dispositif d'éclairage selon l'une quelconque des revendications précédentes, **caractérisé en ce que** la ou les sources de lumière (12, 14) sont réalisées sous forme de diode électroluminescente (DEL).

12. Système d'éclairage qui comporte une pluralité de dispositifs d'éclairage selon l'une quelconque des revendications 1 à 11.

13. Système d'éclairage selon la revendication 12, **caractérisé en ce que** les dispositifs d'éclairage sont agencés parallèlement les uns aux autres.

14. Guide de lumière qui est prévu pour un dispositif d'éclairage selon l'une quelconque des revendications 1 à 11 et/ou pour un système d'éclairage selon la revendication 12 ou 13.
